(19) **Europäisches Patentamt**

**European Patent Office**

**Office européen des brevets**

(11) **EP 1 128 732 B1**

(12) **FASCICULE DE BREVET EUROPEEN**

(45) Date de publication et mention
de la délivrance du brevet:
**30.08.2006 Bulletin 2006/35**

(51) Int Cl.:
*A21D 2/26* *(2006.01)*    *A21D 13/08* *(2006.01)*

(21) Numéro de dépôt: **99971669.9**

(22) Date de dépôt: **10.11.1999**

(86) Numéro de dépôt international:
**PCT/FR1999/002763**

(87) Numéro de publication internationale:
**WO 2000/027209 (18.05.2000 Gazette 2000/20)**

(54) **UTILISATION DE PUROINDOLINE POUR LA PREPARATION DE BISCUITS, PATE DE BISCUIT ET BISCUITS EN RESULTANT**

VERWENDUNG VON PUROINDOLIN ZUR HERSTELLUNG VON KEKSEN, DANACH ERHÄLTLICHE KEKSTEIGE UND KEKSE

USE OF PUROINDOLINE FOR PREPARING BISCUITS, BISCUIT DOUGHS AND BISCUITS RESULTING THEREFROM

(84) Etats contractants désignés:
**AT BE CH CY DE DK ES FI FR GB GR IE IT LI LU MC NL PT SE**

(30) Priorité: **10.11.1998 FR 9814135**

(43) Date de publication de la demande:
**05.09.2001 Bulletin 2001/36**

(73) Titulaire: **LU France**
**91130 Ris Orangis (FR)**

(72) Inventeurs:
• DUBREIL, Laurence
**F-44430 Le Loroux Bottereau (FR)**
• LE GUILLOU, Anne
**F-94260 Fresnes (FR)**
• VEREL, Aliette
**F-91570 Bièvres (FR)**

(74) Mandataire: **Vialle-Presles, Marie José et al**
**Cabinet ORES,**
**36, rue de St Pétersbourg**
**75008 Paris (FR)**

(56) Documents cités:
• L. DUBREIL ET AL.: "Effect of puroindolines on the breadmaking properties of wheat flour" CEREAL CHEMISTRY., vol. 75, no. 2, 1998, pages 222-229, XP002110545 AMERICAN ASSOCIATION OF CEREAL CHEMISTS. MINNEAPOLIS., US cité dans la demande

**Description**

L'invention est relative à l'utilisation de puroindolines en tant qu'additif de biscuiterie.

Les puroindolines sont des protéines présentes dans le grain de blé, et ayant la capacité d'interagir avec les lipides. 2 isoformes des puroindolines, respectivement dénommées puroindoline a et puroindoline b, ont été caractérisées. Il s'agit de protéines basiques (pI -10) de faible poids moléculaire (13 kDa environ) ; elles comprennent 10 résidus cystéine, formant 5 ponts disulfures, et un domaine riche en résidus tryptophane [BLOCHET et al., In : « Gluten Proteins 1990 » ; (BUSHUK W. and TKACHUK R., eds), AACC, St Paul Minnesota, pp 314-325 (1991) ; BLOCHET et al., FEBS Lett., 329:336-340, (1993).

D'autre part, une publication récente [GIROUX et MORRIS, Proceedings of the National Academy of Sciences, vol. 95 p.6262-6266, (1998)] indique que la protéine dénommée friabiline, considérée comme un marqueur biochimique de la dureté des grains de blé [GREENWELL et SCHOFIELD, Cereal Chem., 63, 369-380 (1986)], est un hétérodimère de puroindolines a et b impliqué dans le contrôle de la dureté de l'endosperme.

Les puroindolines possèdent des propriétés tensioactives particulières, liées à leur forte affinité pour les lipides ; elles ont en particulier un fort pouvoir moussant, qui est augmenté en présence de lipides polaires [DUBREIL et al. J. Agric. Food Chem. 45:108-116 (1997) ; WILDE et al., J. Agric. Food Chem., 41, 1570-1576 (1993)]. Il a ainsi par exemple été montré que l'addition de puroindoline permettait de restaurer les propriétés moussantes de la bière additionnée d'acide stéarique, de phospholipides, ou de triglycérides [CLARK et al., J. Inst. Brew. 100, 23-25 (1994)], ou celles du blanc d'oeuf additionné d'huile [HUSBAND et al., In : « Food Macromolecules and Colloids » (DICKINSON E. et LODENT D., eds), Royal Society of Chemistry, London, pp. 285-296, (1995)].

Des travaux récents, concernant les applications potentielles des propriétés des puroindolines dans le cadre de la fabrication du pain, montrent que l'ajout d'une faible quantité de puroindoline (0,1% par rapport au poids de la farine) modifie fortement les propriétés rhéologiques de la pâte et la structure de la mie des pains [DUBREIL et al. Cereal Chem. 75, 2: 222-229, (1998)]. Toutefois, l'effet des puroindolines sur le volume du produit final après cuisson varie nettement selon la qualité boulangère de la farine utilisée (qui est liée pour une grande part à sa composition en gluténines). Lorsque les puroindolines sont ajoutées à une farine de bonne qualité boulangère, on observe une diminution de l'ordre de 10% du volume du pain, (en d'autres termes, une augmentation de sa densité) par rapport au pain fabriqué sans ajout de puroindolines ; cette diminution de volume atteint 20% si une farine de mauvaise qualité boulangère est utilisée. En revanche, si on ajoute les puroindolines à une farine de qualité boulangère moyenne (résultant du mélange des 2 précédentes), on observe une augmentation du volume du pain de l'ordre de 20%.

Les Inventeurs ont entrepris l'étude de l'effet des puroindolines sur des préparations plus complexes que la pâte à pain, telles que les pâtes habituellement utilisées en pâtisserie et en biscuiterie.

Ils ont ainsi constaté que l'addition de puroindoline lors de la préparation de biscuits induisait un effet significatif sur la texture et/ou la densité du produit fini, et qu'il était possible de contrôler indépendamment ces deux paramètres.

La présente invention a pour objet l'utilisation de puroindoline comme additif permettant de contrôler la texture et/ou la densité d'un biscuit.

Au sens de la présente invention, on entend par : « puroindoline », non seulement les puroindolines a et b de blé, mentionnées ci-dessus, mais également toute protéine naturelle ou recombinante, constituée par au moins une chaîne polypeptidique ayant la séquence d'une des isoformes ou variants alléliques des puroindolines de blé, ou de protéines homologues présentes dans d'autres céréales telles que l'avoine, l'orge, le triticale, le seigle.

Ces puroindolines peuvent être utilisées sous forme de monomères ainsi que sous forme d'assemblages homomères ou hétéromères.

Au sens de la présente invention, on entend par : « biscuit », tout produit obtenu par cuisson d'un mélange, généralement sous forme de pâte, comprenant, outre de la farine de céréale(s), d'autres ingrédients apportant des protéines, des glucides, et/ou des lipides ; il peut s'agir par exemple de protéines d'origine animale telles que les protéines d'oeuf, de lait, etc., de protéines d'origine végétale telles que les protéines de soja, etc., de sucre, de matières grasses d'origine animale ou végétale. La pâte est préparée, à partir desdits ingrédients, selon une quelconque des techniques classiquement utilisées en biscuiterie, qui sont connues en elles-mêmes ; on peut ainsi, par exemple, préparer une pâte laminée, ou formée par rotative, (pour obtenir des produits de type biscuit sec), une pâte levée pour obtenir des produits de type cake), une pâte foisonnée (pour obtenir des produits de type génoise), une pâte fermentée pour obtenir des produits de type « cracker » etc. On peut également préparer un biscuit en effectuant tout ou partie du mélange, du pétrissage et de la cuisson des ingrédients, dans un cuiseur-extrudeur.

Les travaux antérieurs dans le domaine de la boulangerie mentionnés ci-dessus, ont montré que l'ajout de puroindolines à des farines dépourvues de puroindolines endogènes, entraînait une augmentation de la densité, et donc une diminution du volume du pain [DUBREIL et al., publication précitée (1997)]. Il pouvait donc être supposé que l'utilisation en biscuiterie de ces mêmes farines additionnées de puroindolines, entraînerait des effets semblables.

Or les Inventeurs ont constaté que, de manière surprenante, l'ajout de puroindoline dans le cadre de la préparation de biscuits n'entraînait d'augmentation de la densité que dans le cas particulier des biscuits foisonnés préparés à partir d'une pâte à teneur élevée (c'est à dire supérieure à 7%) en matière grasse, et pouvait, dans ce cas, être contrebalancée par l'addition d'émulsifiants. Dans les autres cas, on observe au contraire une diminution de la densité ; d'autre part, on observe que l'ajout de puroindolines entraîne dans tous les cas une augmentation de la fermeté des biscuits moelleux et des biscuits foisonnés.

Les effets de l'utilisation de puroindoline peuvent être modulés selon la teneur en eau de la pâte, et/ou sa teneur en matières grasses et/ou la quantité d'émulsifiant qu'elle contient.

La diminution de la densité induite par l'addition de puroindolines est par exemple plus faible dans le cas des produits obtenus à partir d'une pâte contenant peu d'eau (biscuits secs laminés, par exemple).

L'effet sur la diminution de la densité devient également moins important lorsque la teneur en matières grasses augmente ; comme indiqué ci-dessus, pour une teneur élevée en matières grasses, on observe au contraire dans le cas des biscuits foisonnés, une augmentation de la densité.

Toutefois, dans les biscuits foisonnés contenant de la matière grasse et des puroindolines, la diminution de la densité est favorisée par l'addition d'émulsifiants tels que la lécithine, les mono et di glycérides d'acides gras, les esters acétiques, lactiques, citriques, tartriques des mono et diglycérides d'acides gras, les esters mono- et di- acétyltartrique des mono et di glycérides d'acides gras, les esters mixtes acétiques et tartriques des mono et di glycérides d'acides gras, les sucroesters d'acides gras, les esters polyglycériques d'acides gras,les esters de propane 1, 2 diol d'acides gras, le stéaroyl-2- lactylate de sodium,le stéaroyl-2-lactylate de calcium. Les émulsifiants permettent de contrebalancer l'effet d'une teneur élevée en matières grasses susceptibles de piéger les puroindolines.

Conformément à l'invention, ladite puroindoline peut par exemple être utilisée :

- pour diminuer la densité d'un biscuit foisonné obtenu à partir d'une pâte dont la teneur en matière grasse est inférieure ou égale à 4% du poids total de la pâte ;
- pour diminuer la densité d'un biscuit, sec ou moelleux, non-foisonné obtenu à partir d'une pâte dont la teneur en matière grasse est comprise entre 2% et 30%, de préférence entre 2 et 20 % dans le cas d'un biscuit sec, du poids total de la pâte ;
- pour augmenter la fermeté d'un biscuit moelleux ou foisonné ; cette augmentation de fermeté contribue notamment à l'obtention d'une sensation de fondant en bouche, appréciée des consommateurs.

La puroindoline induit une diminution de la densité supérieure à celle observée dans les mêmes conditions, avec des produits habituellement employés pour diminuer la densité des biscuits, tels que l'ovalbumine ; elle peut donc avantageusement être utilisée en remplacement de tout ou partie de ces produits, ou d'ingrédients qui les contiennent, notamment les oeufs. L'effet sur la diminution de la densité sera alors d'autant plus marqué que la diminution de la quantité d'oeufs entraîne un abaissement de la teneur totale en matières grasses dans le produit fini. En outre, les oeufs constituant une matière première très variable en termes de qualité, leur remplacement par la puroindoline permet donc à densité égale, une meilleure reproductibilité du produit fini.

L'addition de puroindoline peut également permettre d'améliorer une farine de mauvaise qualité biscuitière, et d'obtenir à partir de celle-ci des biscuits de densité similaire à ceux obtenus à partir d'une farine de bonne qualité biscuitière.

Pour la mise en oeuvre de la présente invention, on peut ajouter la puroindoline à raison de 0,02 à 5%, de préférence 0,05 à 2% du poids sec de la farine utilisée pour la préparation du biscuit, selon la teneur initiale de la farine en puroindoline, et la teneur finale que l'on souhaite obtenir.

On peut utiliser une préparation de puroindoline purifiée (contenant une seule isoforme ou un mélange d'isoformes) ; on peut également utiliser une fraction céréalière (par exemple gluten ou amidon) enrichie en puroindoline.

Les farines antérieurement utilisées en biscuiterie ont une teneur en puroindoline qui ne dépasse pas 0,2% (du poids sec de la farine). L'invention englobe également l'utilisation, pour la préparation de biscuits, de farines ayant une teneur en puroindoline supérieure à cette valeur, et de préférence comprise entre 0,2 et 5%, avantageusement entre 0,2 et 2% du poids sec de la farine.

On entend par « farine » non seulement de la farine de blé, mais également de la farine d'autres céréales, telles que le seigle, l'orge, le triticale, ou l'avoine, ou un mélange de ces farines.

On peut utiliser des farines enrichies en puroindolines par addition de puroindoline purifiée, ou d'une fraction riche en puroindoline, comme indiqué ci-dessus ; on peut également utiliser des farines obtenues à partir de variétés de céréales sélectionnées sur le critère de leur richesse en puroindolines, ou de céréales transgéniques surexprimant au moins une des isoformes de la puroindoline.

La présente invention englobe également les pâtes à biscuits, ainsi que les biscuits, susceptibles d'être obtenus à partir desdites farines.

La présente invention sera mieux comprise à l'aide du complément de description qui va suivre, qui se réfère à des exemples non-limitatifs d'utilisation de puroindoline dans la préparation de différents types de biscuits.

**EXEMPLE 1 :INCORPORATION DE PUROINDOLINES DANS LA FARINE**

Un mélange des isoformes a et b de puroindoline a été extrait et purifié en utilisant la méthode décrite par BLOCHET et al. (1991, publication précitée), modifiée par COMPOINT et al. [Large scale and rapid purification of plant lipid binding proteins by combining TRITON X114 phase partitioning and ion exchange chromatography, Conference on Plant Proteins from European crops, Nantes, France (1996)] ; la préparation obtenue est lyophilisée.

Les farines enrichies en puroindoline sont obtenues en mélangeant le lyophylisat, qui est désigné dans les exemples ci-après, par le terme « puroindolines purifiées », avec la farine.

Pour les expérimentations décrites dans les exemples ci-après, les mélanges ont été réalisés d'une part, à partir de farine du type habituellement employé en biscuiterie, contenant environ 0,1% à 0,15 % de puroindolines endogènes, et d'autre part, à partir de farine ne contenant pas de puroindoline endogène. Lorsque la quantité de farine utilisée est inférieure à 300 g, les mélanges sont réalisés directement dans le pétrin. Lorsque la quantité de farine utilisée est supérieure à 300 g, le mélange est préalablement homogénéisé par tamisage des poudres (farine. + puroindoline) au tamis 800$\mu$m.

**EXEMPLE 2 : EFFET DES PUROINDOLINES SUR UN BISCUIT SEC LAMINE**

**. Incorporation des puroindolines dans la farine**

a) Farine contenant des puroindolines endogènes

Les puroindolines lyophilisées et de la farine, contenant 0,15 % de puroindolines endogènes sont mélangées dans un pétrin, selon les proportions indiquées dans le Tableau I ci-dessous.

Tableau I

|  | Farine | Quantité de puroindolines lyophilisées ajoutées |
|---|---|---|
| Essai 0% | 290 g | 0 mg |
| Essai 0,05% | 290 g | 145 mg |
| Essai 0,1% | 290 g | 290 mg |
| Essai 0,2% | 290 g | 580 mg |

Parallèlement, des mélanges témoins sont réalisés, en remplaçant les puroindolines par la même quantité d'ovalbumine, qui est une protéine classiquement utilisée pour augmenter le volume (et donc diminuer la densité), des biscuits.

b) Farine dépourvue de puroindoline endogène

Une autre série d'essais est réalisée en ajoutant 0,2% de puroindolines purifiées, ou 0,2% d'ovalbumine, à une farine ne contenant pas de puroindoline endogène.

Pour les deux séries d'essais, la farine enrichie en puroindolines ou en ovalbumine est utilisée comme une farine classique dans la préparation d'un biscuit sec laminé, selon le protocole indiqué ci-après.

**. Formule du biscuit sec laminé**

On mélange les ingrédients suivants, dans les proportions indiquées ci-après :

| | |
|---|---|
| Farine | 100 |
| Sucre glace | 30,00 |
| Saindoux | 8,00 |
| Bicarbonate d'ammonium | 1,00 |
| Sel | 0,63 |
| Bicarbonate de sodium | 0,50 |
| Pyrophosphate de sodium | 0,50 |
| Eau | 26,00 |

Le mélange est pétri pendant 8 minutes (température pétrin : 24°C, vitesse pétrin : 30 trs/min.)

Après repos pendant 30 minutes, la pâte est laminée et découpée en pâtons à l'emporte-pièces.

Les pâtons sont cuits au four, à une température de 280°C, pendant 7 min.

**Densité des biscuits secs laminés**

La masse, la longueur et l'épaisseur sont déterminées sur chaque biscuit, et la densité est calculée.

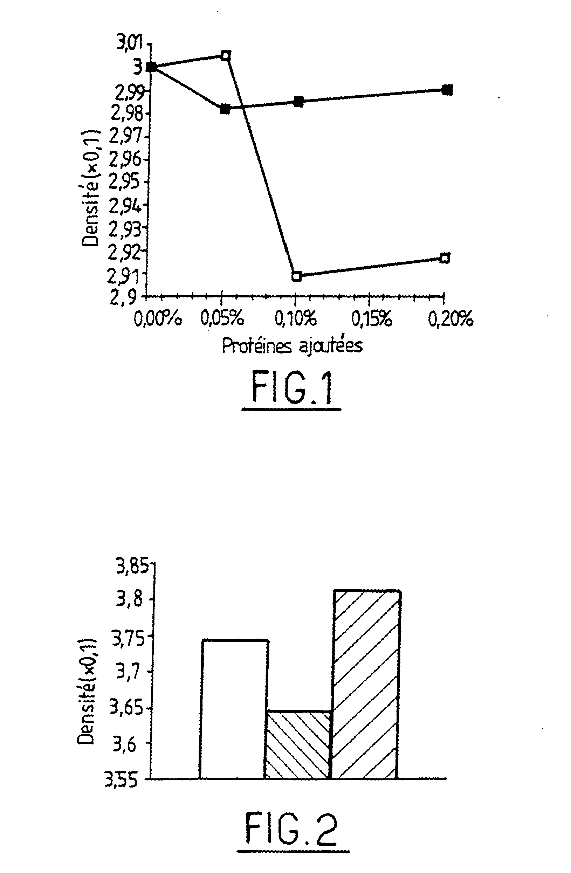

Les résultats des essais a) sont illustrés par la Figure 1, qui représente la densité des biscuits en fonction de la quantité de puroindolines purifiées (□) ou de la quantité d'ovalbumine (●) ajoutées à la farine (% en poids par rapport au poids de la farine).

Aucune différence significative n'est observée entre les biscuits fabriqués à partir de la farine contenant 0,15% de puroindoline endogène, et ceux fabriqués à partir de cette même farine enrichie avec 0,05% de puroindolines purifiées. Par contre, une diminution de la densité des biscuits de l'ordre de 3% est obtenue lorsque les biscuits sont fabriqués à partir de la farine contenant 0,15% de puroindoline endogène enrichie avec 0,1% ou 0,2% de puroindolines purifiées.

Les résultats des essais b) sont illustrés par la Figure 2, qui représente la densité des biscuits obtenus à partir d'une farine ne contenant pas de puroindoline endogène, sans additif, ou additionnée de 0,2% (en poids par rapport au poids de la farine) de puroindolines purifiées, ou d'ovalbumine.

Légende de la Figure 2 :

- Farine sans additif :           □
- Farine + 0,2% puroindoline :          ▨
- Farine + 0,2% ovalbumine :          ▨

Les résultats des deux séries d'essais montrent que l'ajout de puroindoline induit une diminution de la densité des biscuits nettement supérieure à celle induite par l'ovalbumine.

**EXEMPLE 3 : EFFET DES PUROINDOLINES SUR UN BISCUIT MOELLEUX**

Les biscuits sont confectionnés selon la formule (% en poids) indiquée dans le Tableau II ci-dessous :

Tableau II

| | |
|---|---|
| FARINE | 30% |
| SUCRE | 30% |
| OEUFS | 4,5% |
| MATIERE GRASSE | 10% |
| GLYCERINE | 4% |
| EAU | 18% |
| LACTOSERUM | 2% |
| POUDRES LEVANTES | 1,1% |
| SEL | 0,4% |
| LECITHINE | 0,4% |

Trois farines différentes sont utilisées : une farine ne contenant pas de puroindoline (témoin 0% de puroindoline), la même farine à laquelle on ajoute 0,1% en poids par rapport au poids de la farine de puroindolines purifiées et une farine contenant 0,1% de puroindolines endogènes (témoin puroindoline endogène).

Pour l'obtention de la farine enrichie en puroindoline, la farine est tamisée avec les puroindolines à l'aide d'un tamis 800μm. Cette farine enrichie est ensuite retamisée avec le reste des poudres juste avant utilisation.

Ces poudres sont respectivement : des poudres levantes, du sel, de la lécithine, du sucre, des oeufs en poudre. Elles sont pesées dans un même récipient et mélangées avec la farine juste avant l'emploi.

On effectue ensuite le mélange avec les ingrédients liquides, et l'on procède à la cuisson pendant 10 min. à 180°C.

On mesure la densité des biscuits obtenus, ainsi que l'évolution de leur texture au cours de la conservation. Les mesures sont effectuées selon les protocoles suivants :

Densité :

Des rondelles de 2 cm de diamètre sont découpées à l'emporte-pièce dans le biscuit et pesées. La densité est déterminée selon la formule suivante :

$$\text{Densité} = m/(p*r^2h/10)$$

m = masse
r = rayon
h = hauteur des rondelles.

Texture :

La texture est mesurée à l'aide d'un pénétromètre INSTRON ; un cylindre, découpé dans le biscuit à tester, est comprimé à vitesse constante. La courbe force-déplacement de la compression est caractéristique de l'échantillon étudié. La mesure de la force moyenne nécessaire pour comprimer le produit permet de déterminer sa fermeté. Les paramètres de mesure sont les suivants :

- module de compression : cylindre de 2,5 cm de diamètre
- distance entre les plateaux : 15 mm
- vitesse de traverse : 40mm/mm
- charge de mesure à l'origine HO : 0,1 N
- charge minimale sécurité : 100N
- déplacement maximal (sécurité) : 13
- compression initiale 0%
- compression finale : 50%
- critère de détection du pic : 0,1 N
- valeur par défaut de max. 1 : 25%

**Résultats :**

Densité

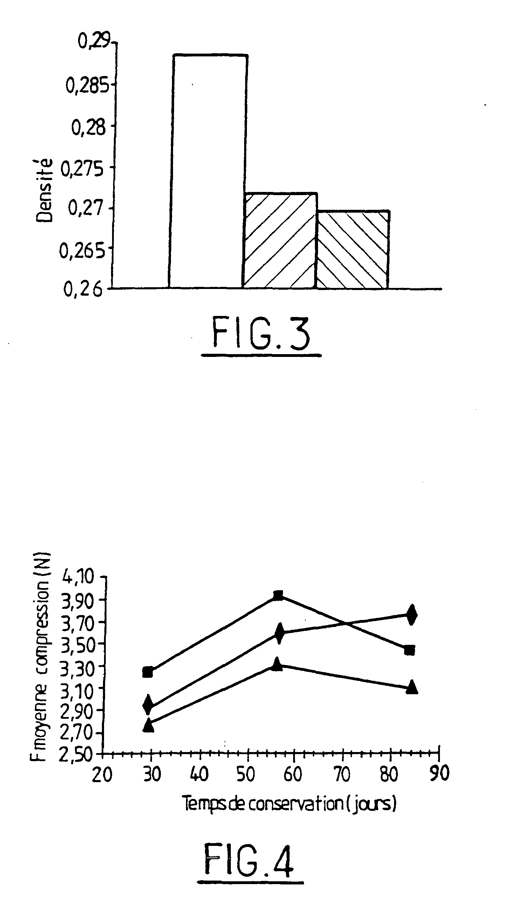

Les résultats sont illustrés par la Figure 3.
Légende de la Figure 3 :

- Farine contenant 0,1% de puroindoline endogène:         ▨
- Farine sans puroindoline endogène :         ☐
- Farine sans puroindoline endogène : + 0,1% puroindolines:         ▧

Les biscuits obtenus à partir de la farine dépourvue de puroindoline endogène sont plus denses que les biscuits fabriqués à partir de la farine contenant 0,1% de puroindoline endogène. L'ajout de 0,1% de puroindolines purifiées à la farine ne contenant pas de puroindoline endogène entraîne une diminution d'environ 6% de la densité du biscuit ; les biscuits moelleux obtenus de la sorte ont une densité similaire à celle des biscuits obtenus à partir de la farine contenant 0,1% de puroindoline endogène.

Texture

Les résultats sont illustrés par la Figure 4 qui représente l'évolution de la force moyenne (Fmoyen) au cours du temps, pour les biscuits obtenus à partir des différentes farines testées : farine contenant 0,1% de puroindoline endogène (▲) ; farine sans puroindoline endogène (♦) ; farine sans puroindoline endogène additionnée de 0,1% (en poids par rapport au poids de la farine) de puroindolines purifiées (■).
Ces résultats montrent que l'addition de puroindoline a un effet significatif sur la texture du biscuit. Les biscuits obtenus à partir de la farine sans puroindoline endogène additionnée de puroindolines purifiées, ont une texture plus ferme, après 29 et 56 jours de conservation, que les biscuits obtenus à partir de la farine contenant 0,1% de puroindoline endogène, ou de la farine sans puroindoline endogène. A partir de 80 jours de conservation (ce qui est supérieur à la durée séparant normalement la fabrication du produit de sa consommation), la différence de texture entre les produits n'est plus significative.

## EXEMPLE 4 : EFFET DES PUROINDOLINES SUR UN BISCUIT FOISONNE

Les biscuits sont confectionnés selon la formule indiquée dans le Tableau III ci-dessous :

Tableau III

|  | En % | En grammes |
|---|---|---|
| Farine | 35 | 500 |
| Sucre semoule | 35 | 500 |
| Oeufs entiers liquides | 30 | 450 |

Deux farines différentes sont utilisées : une farine ne contenant pas de puroindoline endogène, et la même farine enrichie avec 0,1% en poids par rapport au poids de la farine de puroindolines purifiées.

La pâte à biscuits ainsi obtenue contient environ 4% de matières grasses apportées par les oeufs et la farine.

La densité et la texture des biscuits obtenus sont mesurées comme indiqué à l'exemple 3 ci-dessus.

### Résultats

Densité

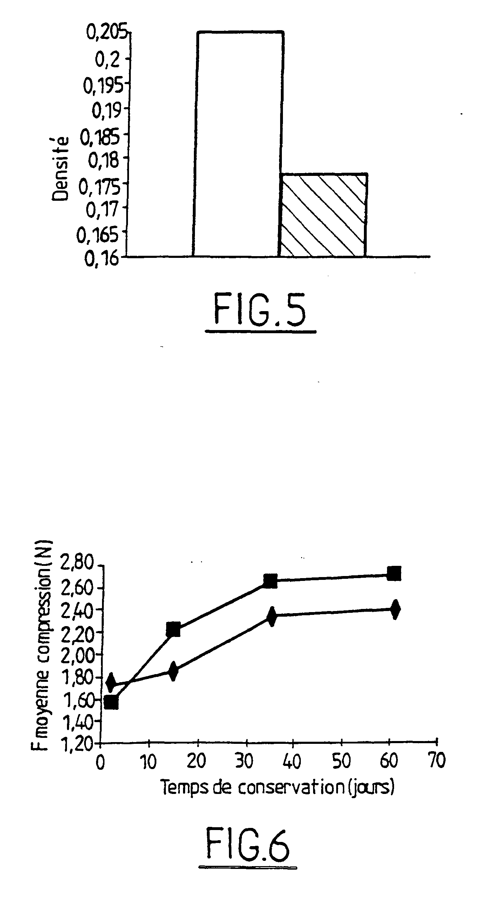

Les résultats sont illustrés par la Figure 5.
Légende de la Figure 5 :

- Farine sans puroindolines endogènes : □
- Farine sans puroindolines endogènes + 0,1% puroindolines: ▨

Ces résultats montrent que l'ajout de 0,1% de puroindolines purifiées entraîne une diminution de 14% de la densité des biscuits.

### Texture

Les résultats sont illustrés par la Figure 6 qui représente l'évolution de la force moyenne (Fmoyen) au cours de la conservation, pour les biscuits obtenus à partir de la farine sans puroindoline endogène (♦), ou de la farine sans puroindoline endogène, additionnée de 0,1% (en poids par rapport au poids de la farine) de puroindolines purifiées **(■).**

Les biscuits foisonnés contenant des puroindolines purifiées possèdent une texture plus ferme, qui se traduit par une fermeté supérieure de 13%, à 61 jours de conservation. Cet effet est plus important que celui, décrit à l'exemple 3, observé dans le cas des biscuits moelleux.

## EXEMPLE 5 : EFFET DES PUROINDOLINES SUR UN BISCUIT FOISONNE CONTENANT 3% D'HUILE DE COLZA

. Incorporation des puroindolines dans la farine

Les biscuits sont confectionnés selon la formule indiquée dans le Tableau IV ci-dessous :

Tableau IV

|  | En % | En gramme |
|---|---|---|
| Farine | 33,5 | 500 |
| Huile de colza | 3 | 50 |
| Sucre semoule | 33,5 | 500 |
| Oeufs entiers liquides | 30 | 450 |

Deux farines différentes sont utilisées : une farine ne contenant pas de puroindoline endogène, et la même farine enrichie avec 0,1% de puroindolines purifiées.

L'huile de colza est ajoutée avant l'étape de foisonnement.

La pâte à biscuits ainsi obtenue contient environ 7% de matières grasses, compte tenu de celles apportées par les oeufs et la farine.

La densité et la texture des biscuits obtenus sont mesurées comme indiqué à l'exemple 3 ci-dessus.

Densité

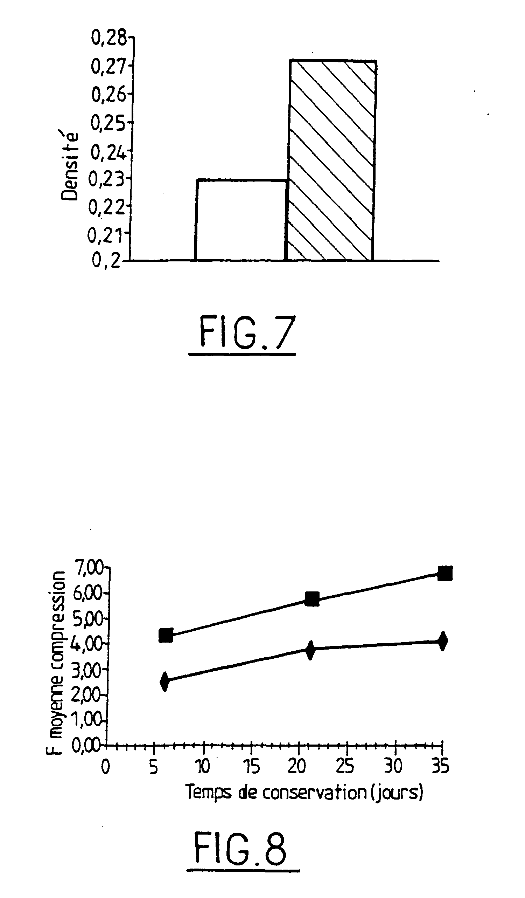

Les résultats sont illustrés par la Figure 7.

Légende de la Figure 7 :

- Farine sans puroindolines endogènes : □
- Farine sans puroindolines endogènes + 0,1% puroindolines: ▨

L'ajout de 0,1% de puroindolines purifiées à la farine ne contenant pas de puroindoline endogène entraîne une augmentation significative, de l'ordre de 20%, de la densité des biscuits.

. Texture

Les résultats sont illustrés par la Figure 8 qui représente l'évolution de la force moyenne (Fmoyen) au cours de la conservation, pour les biscuits obtenus à partir de la farine sans puroindoline endogène (♦), ou de la farine sans puroindoline endogène, additionnée de 0,1% (en poids par rapport au poids de la farine) de puroindolines purifiées (■).

Les biscuits obtenus à partir de la farine additionnée de puroindolines ont, à 35 jours de conservation, une fermeté supérieure de 65% à celle des biscuits obtenus à partir de la farine sans puroindoline.

Les résultats obtenus montrent que l'effet des puroindolines sur la densité des biscuits foisonnés dépend de la teneur en matière grasse de la formule. On peut ainsi utiliser les puroindolines pour diminuer ou au contraire pour augmenter la densité de ce type de produit, selon sa teneur en matières grasses.

L'effet des puroindolines sur la texture apparaît également lié à la teneur en matière grasse ; cependant, il va toujours dans le même sens, c'est-à-dire vers une augmentation de la fermeté.

**Revendications**

**1.** Utilisation de puroindoline comme additif permettant de contrôler la texture et/ou la densité d'un biscuit.

**2.** Utilisation selon la revendication 1, **caractérisée en ce que** l'on utilise la puroindoline à raison de 0,02 à 5% en poids par rapport au poids de la farine.

**3.** Utilisation selon une quelconque des revendications 1 ou 2, **caractérisée en ce que** ladite puroindoline est ajoutée à la farine destinée à la préparation dudit biscuit.

**4.** Utilisation selon une quelconque des revendications 1 ou 2, **caractérisée en ce que** ladite puroindoline est ajoutée à la pâte destinée à la préparation dudit biscuit.

**5.** Utilisation selon une quelconque des revendications 1 à 4, **caractérisée en ce que** l'on utilise la puroindoline pour augmenter la fermeté du dit biscuit.

**6.** Utilisation selon une quelconque des revendications 1 à 5, **caractérisée en ce que** ladite puroindoline est utilisée pour contrôler la densité d'un biscuit obtenu à partir d'une pâte dont la teneur en matière grasse est comprise entre 2 et 30% du poids total de la pâte.

**7.** Utilisation selon la revendication 6, **caractérisée en ce que** ladite puroindoline est utilisée pour diminuer la densité d'un biscuit sec obtenu à partir d'une pâte dont la teneur en matière grasse est comprise entre 2 et 20% du poids total de la pâte.

**8.** Utilisation selon la revendication 6,**caractérisée en ce que** ladite puroindoline est utilisée pour diminuer la densité d'un biscuit moelleux obtenu à partir d'une pâte dont la teneur en matière grasse est comprise entre 2 et 30% du poids total de la pâte

**9.** Utilisation selon la revendication 6, **caractérisée en ce que** ladite puroindoline est utilisée pour diminuer la densité d'un biscuit foisonné obtenu à partir d'une pâte dont la teneur en matière grasse est inférieure ou égale à 4% du poids total de la pâte.

**10.** Utilisation selon une quelconque des revendications 1 à 5, **caractérisée en ce que** ladite puroindoline est utilisée pour augmenter la densité d'un biscuit foisonné obtenu à partir d'une pâte sans émulsifiant ajouté dont la teneur en matière grasse totale est supérieure ou égale à 7% du poids total de la pâte

**11.** Utilisation d'une farine dont la teneur en puroindoline est supérieure à 0,2 % du poids sec de la farine, pour la préparation de biscuits.

**12.** Utilisation selon la revendication 11, **caractérisée en ce que** la teneur en puroindoline de ladite farine est comprise entre 0,2% et 2% du poids sec de la farine

**13.** Biscuit susceptible d'être obtenu à partir d'une farine telle que définie dans une quelconque des revendications 11 ou 12.

**14.** Pâte à biscuits susceptible d'être obtenue à partir d'une farine telle que définie dans une quelconque des revendications 11 ou 12.

**Claims**

**1.** Use of puroindoline as an additive for controlling the texture and/or density of a biscuit.

**2.** Use according to claim 1, **characterised in that** the puroindoline is used in an amount of from 0.02 to 5 wt.%, based on the weight of the flour.

**3.** Use according to any one of claims 1 and 2, **characterised in that** the puroindoline is added to the flour intended for the preparation of the biscuit.

**4.** Use according to any one of claims 1 and 2, **characterised in that** the puroindoline is added to the dough intended for the preparation of the biscuit.

**5.** Use according to any one of claims 1 to 4, **characterised in that** the puroindoline is used to increase the firmness of the biscuit.

**6.** Use according to any one of claims 1 to 5, **characterised in that** the puroindoline is used to control the density of a biscuit obtained from a dough, the fat content of which is between 2 and 30% of the total weight of the dough.

**7.** Use according to claim 6, **characterised in that** the puroindoline is used to reduce the density of a dry biscuit obtained from a dough, the fat content of which is between 2 and 20% of the total weight of the dough.

**8.** Use according to claim 6, **characterised in that** the puroindoline is used to reduce the density of a moist biscuit obtained from a dough, the fat content of which is between 2 and 30% of the total weight of the dough.

**9.** Use according to claim 6, **characterised in that** the puroindoline is used to reduce the density of a puffed biscuit obtained from a dough, the fat content of which is less than or equal to 4% of the total weight of the dough.

**10.** Use according to any one of claims 1 to 5, **characterised in that** the puroindoline is used to increase the density of a puffed biscuit obtained from a dough without added emulsifier, the total fat content of which is greater than or equal to 7% of the total weight of the dough.

**11.** Use of a flour, the puroindoline content of which is greater than 0.2% of the dry weight of the flour, for the preparation of biscuits.

**12.** Use according to claim 11, **characterised in that** the puroindoline content of said flour is between 0.2% and 2% of the dry weight of the flour.

**13.** Biscuit which may be obtained from a flour as defined in any one of claims 11 or 12.

**14.** Biscuit dough which may be obtained from a flour as defined in any one of claims 11 or 12.


**Patentansprüche**

**1.** Verwendung von Puroindolin als Zusatz zur Steuerung der Struktur und/oder der Dichte eines Kekses.

**2.** Verwendung gemäß Anspruch 1, **dadurch gekennzeichnet, dass** das Puroindolin in einem Verhältnis von 0,02 bis 5 Gew.% gegenüber dem Gewicht des Mehls einsetzt wird.

**3.** Verwendung gemäß einem der Ansprüche 1 oder 2, **dadurch gekennzeichnet, dass** das Puroindolin zu dem Mehl, das für die Zubereitung des Kekses bestimmt ist, hinzugefügt wird.

**4.** Verwendung gemäß einem der Ansprüche 1 oder 2, **dadurch gekennzeichnet, dass** das Puroindolin zu Teig, der dem für die Zubereitung des Kekses bestimmt ist, hinzugefügt wird.

**5.** Verwendung gemäß einem der Ansprüche 1 bis 4, **dadurch gekennzeichnet, dass** das Puroindotin zum Erhöhen der Festigkeit des Kekses verwendet wird.

**6.** Verwendung gemäß einem der Ansprüche 1 bis 5, **dadurch gekennzeichnet, dass** das Puroindolin zum Steuern der Dichte eines Kekses verwendet wird, der ausgehend von einem Teig gewonnen wird, dessen Gehalt an Fett zwischen 2 und 30 % des Gesamtgewichts des Teiges umfasst.

**7.** Verwendung gemäß Anspruch 6, **dadurch gekennzeichnet dass**, das Puroindolin zum Vermindern der Dichte eines trockenen Kekses verwendet wird, der ausgehend von einem Teig gewonnen wird, dessen Gehalt an Fett zwischen 2 und 20 % des Gesamtgewichts des Teiges umfasst.

**8.** Verwendung gemäß Anspruch 6, **dadurch gekennzeichnet, dass** das Puroindolin zum Vermindern der Dichte eines weichen Kekses verwendet wird, der ausgehend von einem Teig gewonnen wird, dessen Gehalt an Fett zwischen 2 und 30 % des Gesamtgewichts des Teiges umfasst.

**9.** Verwendung gemäß Anspruch 6, **dadurch gekennzeichnet, dass** das Puroindolin zum Vermindern der Dichte eines überquellenden Kekses verwendet wird, der ausgehend von einem Teig gewonnen wird, dessen Gehalt an Fett kleiner als oder gleich 4 % des Gesamtgewichts des Teiges ist.

**10.** Verwendung gemäß einem der Ansprüche 1 bis 5, **dadurch gekennzeichnet, dass** das Puroindolin zur Erhöhung der Dichte eines überquellenden Kekses verwendet wird, der ausgehend von einem Teig ohne Zugabe von Emulgatoren gewonnen wird und dessen Gehalt an Fett insgesamt größer als oder gleich 7% des Gesamtgewichts des Teiges ist.

**11.** Verwendung eines Mehls für die Zubereitung von Keksen, dessen Gehalt an Puroindolin größer als 0,2 % des Trockengewichts des Mehls ist.

**12.** Verwendung gemäß Anspruch 11, **dadurch gekennzeichnet, dass** der Gehalt des Mehls an Puroindohn zwischen 0,2 und 2 % des Trockengewichts des Mehls umfasst.

**13.** Ein Keks erhältlich ausgehend von einem Mehl nach einem der Ansprüche 11 oder 12.

**14.** Ein Keksteig erhältlich ausgehend von einem Mehl nach einem der Ansprüche 11 oder 12.

FIG.1

FIG.2

FIG.3

FIG.4

FIG.5

FIG.6

FIG.7

FIG.8

Temps de conservation (jours)